(19) **Europäisches Patentamt / European Patent Office / Office européen des brevets**

(11) **EP 2 168 993 B1**

(12) **EUROPEAN PATENT SPECIFICATION**

(45) Date of publication and mention
of the grant of the patent:
**19.10.2016 Bulletin 2016/42**

(51) Int Cl.:
*C08G 18/76* (2006.01)        *C08G 18/08* (2006.01)
*C08K 5/29* (2006.01)         *C08J 9/00* (2006.01)
*C08L 67/04* (2006.01)        *C08G 101/00* (2006.01)
*C08G 18/42* (2006.01)        *C08J 9/18* (2006.01)

(21) Application number: **08776725.7**

(22) Date of filing: **18.06.2008**

(86) International application number:
**PCT/JP2008/001572**

(87) International publication number:
**WO 2009/001525 (31.12.2008 Gazette 2009/01)**

(54) **BIODEGRADABLE ALIPHATIC POLYESTER-BASED FOAMED PARTICLE AND MOLDED PRODUCT OF THE SAME**

GESCHÄUMTES TEILCHEN AUS BIOLOGISCH ABBAUBAREM ALIPHATISCHEM POLYESTER UND DARAUS HERGESTELLTES FORMTEIL

PARTICULE EXPANSÉE EN POLYESTER ALIPHATIQUE BIODÉGRADABLE ET ARTICLE MOULÉ PRODUIT À PARTIR DE CETTE PARTICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.06.2007   JP 2007169007
27.06.2007   JP 2007169008**

(43) Date of publication of application:
**31.03.2010   Bulletin 2010/13**

(73) Proprietor: **Kaneka Corporation**
**Osaka (JP)**

(72) Inventors:
• **MIYAGAWA, Toshio**
**Settu-shi, Osaka 566-0072 (JP)**
• **FURUKAWA, Tomonori**
**Settu-shi, Osaka 566-0072 (JP)**

(74) Representative: **Vossius & Partner**
**Patentanwälte Rechtsanwälte mbB**
**Siebertstrasse 3**
**81675 München (DE)**

(56) References cited:
WO-A1-2006/112287       JP-A- 2001 026 658
JP-A- 2003 301 068       JP-A- 2005 060 689
JP-A- 2006 022 242

**Description**

The present invention relates to aliphatic polyester-based resin foamed particles constituted with poly(3-hydroxyalkanoate) and a polylactic acid-based resin, a molded product of biodegradable aliphatic polyester-based resin foamed particles produced by fusion bonding of the foamed particles with one another, and a manufacturing method of the same.

Since resin foams are characterized by lightweight properties, shock-absorbing properties, thermal insulation properties, formability and the like, they are highly functional, and superior in handling characteristics and the like. Therefore, the resin foams are frequently used predominantly in packaging containers, shock-absorbing materials and the like in recent years. On the other hand, general synthetic resins are not degradable, or necessitate a long period of time even if they are degradable. To leave these resins to stand in nature has been regarded as a societal problem since it can lead to environmental pollutions. Under such circumstances, biodegradable resins which can be degraded by microorganisms in natural environments have been investigated, and foams produced using a biodegradable aliphatic polyester such as polybutylene succinate or polylactic. acid, or a naturally occurring polymer such as starch have been commercialized hitherto.

Among them, biodegradable resins produced using a source material derived from a plant has been expected as one of measures to prevent global warming since absorption and fixation of carbon dioxide can be accomplished along with growth of plants, without use of oil resources.

Exemplary biodegradable resins derived from a plant include (1) aliphatic polyesters produced by microorganisms such as polyhydroxyalkanoate, and (2) polylactic acids obtained by polymerization of lactic acid obtained from plants such as corn. In particular, among the aliphatic polyesters (1), poly(3-hydroxyalkanoate) (hereinafter, may be also referred to as P3HA) is excellent in degradability under any environment either aerobic or anaerobic, and exhibits superior water resistance, resistance to water vapor permeability and heat resistance under common conditions in use. In addition, since poly(3-hydroxybutyrate)-co-(3-hydroxyhexanoate) (hereinafter, also referred to as PHBH) among P3HA can have altered physical properties such as a melting point, heat resistance and flexibility by regulating the compositional ratio of constitutive monomers, a relatively soft material can be obtained therefrom. Thus, development of foamed products of PHBH has been strongly desired as a soft material derived from a plant.

With respect to applicable usage, for example, such foamed products can be used for lunch boxes, eating utensils, containers of boxed meals and prepared foods sold at convenience stores, cups for pot noodle, cold reserving boxes, flower pots, tapes, and shock-absorbing materials for use in transport of house hold electrical products such as stereos, shock-absorbing materials for use in transport of precision machineries such as computers, printers and clocks, shock-absorbing materials for use in transport of ceramic industrial products such as glasses, potteries and porcelains, shock-absorbing materials for use in transport of optical instruments such as cameras, eyeglasses, telescopes and microscopes, as well as automobile bumpers and automobile interior members such as luggage boxes, shading materials, heat insulating materials, acoustical materials, medical applications, hygiene applications, applications in general industry including agricultures, fisheries, forestries, manufacturing industries, architectures, civil engineering and transports and traffics, applications in recreation including leisure and sports, and the like.

P3HA including PHBH has been expected to be usable as an alternative of general-purpose resins in applications of conventional general-purpose resins in future; however, it is not currently easy to enter the low-end market in terms of the costs. Thus, when used in a foam, it is technically important to achieve a high degree of foaming so as to minimize the amount of resin used. On the other hand, to use a PHBH foam as a shock-absorbing member for the interior of automobiles is economically disadvantageous since PHBH that is more expensive than PP based on the resin pricing must be used in a larger amount due to necessity of adjusting the expansion ratio to be low, in attempts to obtain an equivalent level of rigidity as compared with polypropylene (hereinafter, also referred to as "PP") foams currently used for general-purposes. Therefore, when PHBH is used in a foam, it is important to achieve a high degree of foaming without deteriorating the rigidity.

The present inventors have investigated foamed particles of PHBH, and molded product of the same. For example, by using an isocyanate compound as a crosslinking agent, foamed particles that are favorable in formability and heat resistance, and a soft molded product of the foamed particles could be obtained (Patent Document 1). However, by allowing for a high degree of foaming, the rigidity of the foam is significantly decreased. Therefore, a wide range expansion of applications has been difficult under the current circumstances.

On the other hand, the polylactic acid (2) described above has been a subject of extensive researches and developments as a biodegradable resin derived from a plant that is currently in most advanced stage of practical applications. It is characterized by being a material that is excellent in environmental suitability which can be produced using a source material derived from a plant, similarly to polyhydroxyalkanoate (1), and thus, relatively hard properties like those of polystyrene, for example, can be achieved. However, foamed particles produced by foaming polylactic acid, and molded products of the same are significantly expanded by volume under high temperature and high humidity conditions, leading to problems of failure in usability in applications for which heat resistance is required, such as automobile applications and the like. In attempts to solve the problems, a technique of reducing barrier properties of polylactic acid against the foaming gas and air by, for example, mixing polylactic acid and polyvinyl acetate (Patent Document 2), a technique of adjusting the proportion of L-form or D-form of polylactic acid, and subjecting a heat treatment in molding (Patent Document 3), and the like may be exemplified. However, in any of these cases, heat resistance that permits use in automobile members cannot be achieved. Accordingly, technical improvement has been desired.

In efforts to develop the molded product of the foamed particles as described above, any exemplary combination of polylactic acid and other biodegradable resin has been scarcely reported hitherto. Foamed particles produced by allowing a foaming agent to be absorbed in a copolymer constituted with lactic acid and caprolactone, and a molded product obtained by heat molding of the same (Patent Document 4) may be exemplified; however, the density of the foamed particles specifically indicated is as high as 0.5 g/cc, and the expansion ratio is estimated to be approximately 2.5 fold.

In addition, a resin composition produced by melting and kneading a copolymer of polylactic acid, hydroxybutyric acid and hydroxyvaleric acid, and an organic peroxide component, and a foam produced using the same are disclosed (Patent Document 5). However, crosslinking is not accomplished since an isocyanate compound is not added, and any description is not found stating that a high expansion ratio is achieved. Thus, inferior physical properties as a foam are presumed.

Patent Document 1: pamphlet of International Publication No. 2006/112287

Patent Document 2: JP-A No. 2006-22242

Patent Document 3: JP-A No. 2003-301068

Patent Document 4: JP-A No. Hei 5-170966

Patent Document 5: JP-A No. 2001-26658

In view of the foregoing problems, an object of the present invention is to provide biodegradable aliphatic polyester-based resin foamed particles that are excellent in environmental suitability and are produced using a source material derived from a plant, and a molded product of the same. Accordingly, biodegradable aliphatic polyester-based resin foamed particles retaining high rigidity even when foamed at a high degree and having heat resistance, and a molded product are provided.

The present inventors elaborately investigated in order to solve the foregoing problems, and consequently found that a molded product obtained by melting and kneading P3HA, a polylactic acid-based resin and an isocyanate compound to give a resin composition, and filling aliphatic polyester-based resin foamed particles produced by foaming the resin composition into a die, followed by heat molding can be a molded product of biodegradable aliphatic polyester-based resin foamed particles having high rigidity even though foamed at a high degree, and having heat resistance. Accordingly, the present invention was accomplished.

More specifically, a first aspect of the present invention relates to biodegradable aliphatic polyester-based resin foamed particles produced by foaming a resin composition obtained by melting and kneading a base resin constituted with a polymer having one or more recurring unit represented by the formula: [-O-CHR-CH$_2$-CO-] (wherein, R is an alkyl group represented by C$_n$H$_{2n+1}$; and n is an integer of 1 to 15) and a polylactic acid-based resin, and an isocyanate compound in which: P3HA forms a continuous phase, and the polylactic acid-based resin forms a dispersed phase in the resin composition; and the maximum diameter of the dispersed phase is no greater than 5 μm and in which: the content of the P3HA is 70 to 80% by weight, and the content of the polylactic acid-based resin is 20 to 30% by weight based on the entirety of the base resin; and the content of the isocyanate compound based on 100 parts by weight of the base resin is 1.5 to 5.5 parts by weight. A preferable embodiment relates to the biodegradable aliphatic polyester-based resin foamed particles described above in which: the P3HA is poly(3-hydroxybutyrate-co-3-hydroxyhexanoate) (hereinafter, referred to as PHBH). In the biodegradable aliphatic polyester-based resin foamed articles described above poly(3-hydroxyhexanoate) preferably accounts for 1 mol% to 20 mol% of the composition of the copolymer component that constitutes the PHBH. More preferably in the biodegradable aliphatic polyester-based resin foamed particles described above the expansion ratio of the resin foamed particles is 20 to 40 fold.

A second aspect of the present invention relates to a biodegradable aliphatic polyester-based resin foam molded product produced by filling the biodegradable aliphatic polyester-based resin foamed particles described above into a die, followed by heating and molding.

A third aspect of the present invention relates to a method for manufacturing a biodegradable aliphatic polyester-based resin foam molded product, the method comprising: filling the biodegradable aliphatic polyester-based resin foamed particles described above into a die; and then heating and molding to allow the resin foamed particles to be fused and bound with one another.

A fourth aspect of the present invention relates to a resin composition for producing foamed particles obtained by melting and kneading a base resin constituted with a polymer having one or more recurring unit represented by the formula: [-O-CHR-CH$_2$-CO-] (wherein, R is an alkyl group represented by C$_n$H$_{2n+1}$; and n is an integer of 1 to 15) and a polylactic acid-based resin, and an isocyanate compounds in which: P3HA forms a continuous phase, and the polylactic acid-based resin forms a dispersed phase in the resin composition; and the maximum diameter of the dispersed phase is no greater than 5 μm and in which: the content of the P3HA is 70 to 80% by weight, and the content of the polylactic acid-based resin is 20 to 30% by weight based on the entirety of the base resin; and the content of the isocyanate compound based on 100 parts by weight of the base resin is 1.5 to 5.5 parts by weight. A preferable embodiment relates to the resin composition for producing foamed particles above in which: the P3HA is poly(3-hydroxybutyrate-co-3-hydroxyhexanoate) (hereinafter, referred to as PHBH). Preferably, in the resin composition for producing foamed particles described above poly(3-hydroxyhexanoate) accounts for 1 mol% to 20 mol% of the composition of the copolymer component that constitutes the PHBH.

According to the present invention, biodegradable aliphatic polyester-based resin foamed particles that are excellent in environmental suitability and are produced using a source material derived from a plant, and a molded product of the same can be provided. Thus, biodegradable aliphatic polyester-based resin foamed particles retaining high rigidity even when foamed at a high degree and having heat resistance, and a molded product can be provided.

Hereinafter, the present invention is explained in more detail.

The biodegradable aliphatic polyester-based resin foamed particles of the present invention are produced by foaming a resin composition obtained by melting and a kneading a base resin constituted with poly(3-hydroxyalkanoate), i.e., a polymer having one or more recurring units represented by the formula (1):

$$[-O-CHR-CH_2-CO-] \qquad (1)$$

(wherein, R is an alkyl group represented by C$_n$H$_{2n+1}$; and n is an integer of 1 to 15.) and a polylactic acid-based resin, and an isocyanate compound. The base resin as herein referred to means a main resin component that constitutes the resin composition of the present invention, and indicates P3HA and a polylactic acid-based resin according to the present invention.

P3HA as herein referred to is an aliphatic polyester having a recurring unit constituted with 3-hydroxyalkanoate represented by the above formula (1). The polyester is generally produced from a microorganism. Specific examples of P3HA include homopolymers constituted with one type of 3-hydroxyalkanoate, copolymers constituted with two or more types of 3-hydroxyalkanoate in which n is different from one another, and any mixture prepared by blending two or more types of polymers selected from the group consisting of the aforementioned homopolymers and the aforementioned copolymers. In particular, homopolymers, copolymers and mixtures constituted with a recurring unit selected from the group consisting of a 3-hydroxybutyrate unit in which n is 1, a 3-hydroxyvalylate unit in which n is 2, a 3-hydroxyhexanoate unit in which n is 3, a 3-hydroxyoctanoate unit in which n is 5 and a 3-hydroxyoctadecanoate unit in which n is 15 are preferred; and poly(3-hydroxybutyrate-co-3-hydroxyhexanoate) that is a copolymer of a 3-hydroxybutyrate unit in which n is 1 and a 3-hydroxyhexanoate unit in which n is 3 (hereinafter, also referred to as PHBH) is more preferred. Furthermore, it is more preferred that the composition ratio of the copolymer components that constitute the PHBH be 3-hydroxybutyrate/3-hydroxyhexanoate = 99/1 to 80/20 (mol/mol). When the 3-hydroxybutyrate/3-hydroxyhexanoate composition ratio is greater than 99/1, the melting point is not different from that of polyhydroxybutyrate that is a homopolymer. Therefore, it is necessary to carry out the heat processing at a high temperature, whereby quality control may be difficult since the molecular weight is significantly lowered due to thermal decomposition that occurs during the heat processing, and increase in the expansion ratio may be impossible. In addition, when the 3-hydroxybutyrate/3-hydroxyhexanoate composition ratio is less than 80/20, a long time period is required for recrystallization during the heat processing, which may lead to inferior productivity.

The content of P3HA based on the entirety of the base resin is stated in claim 1 and may be determined ad libitum depending on the performance required for the molded product. When the P3HA forms a continuous phase and the polylactic acid-based resin form as a dispersed phase as described later, the content of P3HA ranges from 70 to 80% by weight based on the entirety of the base resin.

The polylactic acid-based resin of the present invention may be not only a homopolymer of lactic acid, but may be a copolymer including lactic acid. For example, (1) a polymer of lactic acid obtained by producing lactic acid by: fermenting with Lactobacillus glucose obtained by enzymatic degradation of starch obtained from a reproducible plant resource such as corn or sweet potato; and polymerizing the lactic acid may be exemplified. Examples of other polylactic acid-based resin include e.g., (2) copolymers of lactic acid and other aliphatic hydroxycarboxylic acid, (3) copolymers of lactic acid, aliphatic polyhydric alcohol and aliphatic polyvalent carboxylic acid, (4) copolymers of lactic acid and aliphatic polyvalent carboxylic acid, (5) copolymers of lactic acid and polyhydric alcohol, (6) mixtures of any combination of the aforementioned (1) to (5), and the like. As the polylactic acid-based resin, any blend with other polymer, an additive or the like can be also used, and these are generally referred to as polylactic acid-based resin.

Specific examples of the lactic acid include L-lactic acid, D-lactic acid, DL-lactic acid, or cyclic dimers of these, i.e., L-lactide, D-lactide, DL-lactide or a mixture thereof. The copolymerization ratio (D-form/L-form) of the D-form and L-form in polylactic acid is preferably, 2/98 to 40/60 (molar ratio) in light of the expansion ratio and heat resistance, more preferably 3/97 to 30/70 (molar ratio), and still more preferably 8/92 to 20/80 (molar ratio). When the molar proportion of the D-form is less than 8% by mole, the crystallinity may be higher, and may be accompanied by failure in elevation of the expansion ratio and in heterogeneous foaming, whereby the product may be unusable. On the other hand, when the molar fraction of the D-form exceeds 20% by mole, the heat resistance may be inferior, and thus the product may be unusable.

Examples of the other aliphatic hydroxycarboxylic acid described above include glycolic acid, hydroxybutyric acid, hydroxyvaleric acid, hydroxycaproic acid, hydroxyheptanoic acid, and the like. Moreover, examples of the aliphatic polyhydric alcohol include ethylene glycol, 1,4-butanediol, 1,6-hexanediol, 1,4-cyclohexanedimethanol, neopentyl glycol, decamethylene glycol, glycerin, trimethylolpropane, penthaerythritol, and the like. Further, examples of the aliphatic polyvalent carboxylic acid include succinic acid, adipic acid, suberic acid, sebacic acid, dodecanedicarboxylic acid, succinic anhydride, adipate anhydride, trimesic acid, propane tricarboxylic acid, pyromellitic acid, pyromellitic anhydride, and the like.

The content of the polylactic acid-based resin based on the entirety of the base resin is stated in claim 1, and may be determined ad libitum depending on the performance required for the molded product. When the P3HA forms a continuous phase, and the polylactic acid-based resin form as a dispersed phase as described later, the content of the polylactic acid-based resin ranges from 20 to 30% by weight based on the entirety of the base resin.

As the isocyanate compound, for example, a polyisocyanate compound having two or more isocyanate groups in one molecule may be used in the present invention. Specific type of the isocyanate may be aromatic, alicyclic, aliphatic, or the like. For example, aromatic isocyanate includes isocyanate compounds having tolylene, diphenyl methane, naphthylene, tolidine, xylene or triphenylmethane as a skeleton; alicyclic isocyanate includes isocyanate compounds having isophorone or hydrogenated diphenyl methane as a skeleton; aliphatic isocyanate includes isocyanate compounds having hexamethylene or lysine as a skeleton; and the like. Furthermore, two or more of these isocyanate compounds can be also used, and use of tolylene or diphenyl methane, particularly polyisocyanate of diphenyl methane is preferred in light of general-purpose properties, handleability, weather resistance, and the like.

The content of the isocyanate compound is 1.5 to 5.5 parts by weight per 100 parts by weight of the base resin constituted with P3HA and the polylactic acid-based resin. When the content falls within this range, a molded product having combined high expansion ratio, high rigidity, and heat resistance can be manufactured.

To the resin composition of the present invention may be added various additives in addition to the components described above in melting and kneading in the range not to inhibit the effects of the present invention. As the additive herein referred to, for example, a colorant such as a dye or a pigment, an antioxidant, an ultraviolet ray absorbing agent, a plasticizer, a lubricant, a crystallization nucleating agent, an inorganic filler, a cell regulator and the like may be used to adapt for the purposes, and it is more preferred that these additives have biodegradability. In addition, the colorant of the present invention is exemplified by black, gray, brown, blue or green coloring pigment or dye, which may be either organic or inorganic. As such a pigment and dye, conventionally well-known various products can be used, and at least one selected from the group consisting of them can be used.

Examples of the antioxidant of the present invention include hindered phenol based, phosphite based, sulfur based, phosphorus based antioxidants and the like, and at least one selected from the group consisting of them can be used.

Examples of the ultraviolet ray absorbing agent of the present invention include salicylic acid derivatives such as phenyl salicylate and p-tert-butylphenyl salicylate, benzophenones, benzotriazoles, zinc oxide based ultraviolet ray stabilizers, hindered amines and the like, and at least one selected from the group consisting of them can be used.

Examples of the plasticizer of the present invention include glycerin derivatives, ether ester derivatives, glycolic acid derivatives, citric acid derivatives, adipic acid derivatives, rhodine derivatives, tetrahydrofurfuryl alcohol derivatives and the like in light of compatibility with P3HA and polylactic acid, and at least one selected from the group consisting of them can be used.

Examples of the lubricant of the present invention include fatty acid metal salts such as sodium stearate, magnesium stearate, calcium stearate and barium stearate, liquid paraffin, olefin based waxes, stearylamide based compounds and the like, and at least one selected from the group consisting of them can be used.

The crystallization nucleating agent of the present invention is not particularly limited as long as an effect of promoting crystallization of P3HA and polylactic acid can be achieved, and for example, organic substances such as PHB and amide based compounds, inorganic substances such as talc may be exemplified. PHB is preferred in light of compatibility with P3HA and polylactic acid, the effect of promoting crystallization and biodegradability. Additionally, in order to achieve maximum effects of promoting crystallization, the particle size of the crystallization nucleating agent is more preferably minute.

Examples of the inorganic filler of the present invention include inorganic compounds such as silica, talc, calcium silicate, wollastonite, kaolin, clay, mica, zinc oxide, titanium oxide, silicon oxide and the like, and at least one selected from the group consisting of them can be used.

Examples of the cell regulator of the present invention include inorganic nucleating agents such as talc, silica, calcium silicate, calcium carbonate, aluminum oxide, titanium oxide, diatomaceous earth, clay, sodium bicarbonate, alumina, barium sulfate, aluminum oxide and bentonite, and at least one selected from the group consisting of them can be used. The amount of the cell regulator used is usually 0.005 to 2 parts by weight with respect to 100 parts by weight of the resin composition.

The method for manufacturing the biodegradable aliphatic polyester-based resin foam molded product of the present invention is not particularly limited as long as the intended biodegradable aliphatic polyester-based resin foam molded product can be obtained, and for example, may be the manufacturing method as in the following.

<Resin Composition Production Step>

The resin composition of the present invention can be obtained by: first blending a base resin, i.e., P3HA, a polylactic acid-based resin and an isocyanate compound, and further additives such as a colorant such as a dye or a pigment, an antioxidant, an ultraviolet ray absorbing agent, a plasticizer, a lubricant, a crystallization nucleating agent, an inorganic filler, a cell regulator as needed; thereafter melting and kneading with heat using an extruder, a kneader, a banbury mixer, a roll or the like; and then pelletizing into a particle shape that can readily utilized in foaming of the present invention, such as e.g., cylindrical, elliptic cylindrical, spherical, cubic, rectangular solid or the like. The weight of the resin composition per particle is preferably 0.1 to 30 mg, and more preferably 0.5 to 20 mg. When the weight is less than 0.1 mg, production of the resin composition particles themselves may be difficult. In contrast, when the weight is greater than 30 mg, the foamed particles are so large that filling performance of the foamed particles may be deteriorated when molded using the same, whereby the appearance and physical properties of the resulting molded product may be deteriorated.

In order to provide the resin composition in which the P3HA forms a continuous phase and the polylactic acid-based resin forms a dispersed phase, and the maximum diameter of the dispersed phase is no greater than 5 $\mu$m, it is necessary to allow the polylactic acid-based resin to homogenously and finely disperse in P3HA. Therefore, to use a biaxial extruder in melting and kneading with heat is preferred.

With respect to the temperature in the melting and kneading with heat, a temperature at which both P3HA and the polylactic acid-based resin are melted is set, and conditions under which both are completely melted must be selected. Particularly, in order to form the dispersion state as described above, the cylinder temperature of the biaxial extruder is preferably set at a relatively high temperature, and specifically, it is preferred to set at approximately 140°C or higher and 180°C or lower. When the cylinder temperature is lower than this range, the maximum diameter of the dispersed phase exceeds 5 $\mu$m, and variation of the diameter of the dispersed phase is likely to be caused, and the dispersion state tends to be unstable. When foamed particles are prepared from a resin in such a dispersion state, and then production of a molded product is attempted, to obtain a molded product may be difficult due to shrinkage of the foamed particles, by introduction of water vapor.

In the present invention, when the cross section of the resin composition is observed under a microscope, formation of a sea-island structure is found in which P3HA forms a continuous phase, i.e., the sea, and the polylactic acid-based resin forms a dispersed phase, i.e., the island. In this case, the maximum diameter of each dispersed phase is no greater than 5 $\mu$m, preferably no greater than 1 $\mu$m, and more preferably no greater than 0.5 $\mu$m. When the diameter of the dispersed phase becomes large, compatibility of P3HA with the polylactic acid-based resin may be inferior, and it is highly possible that the dispersion stability becomes low. In other words, when the maximum diameter of the dispersed phase is larger than 5 $\mu$m, inhomogeneous dispersion states are likely to be provided. Thus, when the resin composition in such a state is foamed, since the pressure in foaming is imparted locally to parts of the resin film with inferior strength, the cell film tends to be broken in part, the closed cell rate decreases, and shrinkage may occur in foaming molding. The maximum diameter referred to herein means a diameter of a portion having the largest size among those of a dispersed phase observed in a cross sectional direction observed under a transmission electron microscope after cutting the resin composition into a TD (Transverse Direction) cross section with a microtome. The TD cross section referred to herein means a cross section yielded by cutting in a direction (in general, width direction) that is orthogonal to the extrusion direction in pelletization.

<Biodegradable Aliphatic Polyester-Based Resin Foamed Particle Production Step>

After the pellets of the resin composition obtained as described above are dispersed in a water-based dispersion medium with a dispersant in a sealed vessel, a foaming agent is introduced into the sealed vessel, and the mixture is heated to no lower than the softening temperature of the resin composition, and if necessary held at around the foaming temperature for a certain time period. Thereafter, one end of the sealed vessel is opened, and the resin composition and the water-based dispersion medium are released under a lower pressure atmosphere than the pressure of the sealed vessel, whereby foamed particles can be obtained.

As the dispersant described above, an inorganic substance such as calcium triphosphate, calcium pyrophosphate, kaolin, basic magnesium carbonate, aluminum oxide or basic zinc carbonate, and an anionic surfactant such as a dodecyl benzenesulfonic acid sodium salt, an a-olefinsulfonic acid sodium salt or a normal-paraffin sulfonic acid sodium salt can be used in combination. The amount of the inorganic substance used is preferably 0.1 to 3.0 parts by weight based on 100 parts by weight of the resin composition, and the amount of the anionic surfactant used is preferably 0.001 to 0.2 parts by weight based on 100 parts by weight of the resin composition. Further, the dispersion medium is preferably water, in general in view of the economical efficiency and handlability, but not limited thereto as long as it is a water-based medium.

Examples of the foaming agent include saturated hydrocarbons having 3 to 5 carbon atoms such as propane, n-butane, isobutane, n-pentane, isopentane and neopentane, ethers such as dimethyl ether, diethyl ether and methylethyl ether, halogenated hydrocarbons such as monochloromethane, dichloromethane and dichlorodifluoroethane, inorganic gases such as carbon dioxide, nitrogen and air, water, and the like. At least one of these may be used. Taking into consideration the environmental suitability, the foaming agent other than halogenated hydrocarbon is preferred. The amount of the foaming agent added may vary depending on the expansion ratio of the intended foamed particles, the type of the foaming agent, the type of the resin, the proportion of the resin particles and the dispersion medium, the volume of the space in the vessel, impregnation or foaming temperatures, and the like, but may usually fall within the range of 2 to 10,000 parts by weight based on 100 parts by weight of the resin composition.

The expansion ratio of the resulting resin foamed particles preferably falls within the range of 20 to 40 fold taking into consideration the expansion ratio and rigidity of the molded product provided as a final product.

It should be noted that the foamed particles obtained by the aforementioned method may be subjected to aging by compression with a pressurized air if necessary, whereby foamability can be imparted to the foamed particles.

<Molded Product of Biodegradable Aliphatic Polyester-Based Resin Foamed Particles Production Step>

After the foamed particles obtained by the aforementioned method is aged by compression as needed, they are filled into a die, and then water vapor is introduced into the die to allow the foamed particles to be thermally fused and bound with one another, whereby a molded product of the biodegradable aliphatic polyester-based resin foamed particles can be obtained.

The biodegradable aliphatic polyester-based resin foam molded product of the present invention can be used for cold reserving boxes, flower pots, tapes, and shock-absorbing materials for use in transport of house hold electrical products such as stereos, shock-absorbing materials for use in transport of precision machineries such as computers, printers and clocks, shock-absorbing materials for use in transport of ceramic industrial products such as glasses, potteries and porcelains, shock-absorbing materials for use in transport of optical instruments such as cameras, eyeglasses, telescopes and microscopes, as well as interior members such as automobile bumpers and luggage boxes, in addition, shading materials, heat insulating materials, acoustical materials, medical applications, hygiene applications, applications in general industry including agricultures, fisheries, forestries, manufacturing industries, architectures, civil engineering and transports and traffics, applications in recreation including leisure and sports, and the like.

EXAMPLES

Hereinafter, Examples are illustrated to explain the present invention in more detail, but the present invention is not any how limited to these Examples. Further, the designation "part" in Examples is based on the weight. The substances used in the present invention are presented by abbreviation as in the following.

P3HA: poly(3-hydroxyalkanoate)
PHBH: poly(3-hydroxybutyrate-co-3-hydroxyhexanoate)
PHB: poly(3-hydroxybutyrate)
PLA: polylactic acid-based resin
HH proportion: molar fraction (mol%) of hydroxyhexanoate in PHBH
D-form proportion: molar fraction (mol%) of D-form component in PLA

<Glass Transition Temperature (Tg) and Crystalline Melting Temperature (Tm) of Biodegradable Aliphatic Polyester Based Resin>

In differential scanning calorimetry, about 5 mg of the resin composition in Examples and Comparative Examples was weighed precisely, and the temperature was elevated with a differential scanning calorimeter (manufactured by Seiko Electronics Co., Ltd., SSC5200) at a temperature elevation rate of 10°C/min from 0°C to 200°C. The glass transition temperature (Tg) and the crystalline melting temperature (Tm) were determined with the resulting DSC curve.

<Weight Average Molecular Weight Measurement Method of Biodegradable Aliphatic Polyester Based Resin>

According to GPC measurement, the molecular weight (Mw) indicated in terms of the polystyrene equivalent of the resin composition in Examples and Comparative Examples was determined. As the GPC apparatus, a CCP & 8020 system (manufactured by Tosoh Corporation) was employed, and a column GPCK-805L (manufactured by Showa Denko K.K.) was used. Mw was determined at a column temperature of 40°C, by injecting a 200 $\mu$l aliquot of a solution prepared by dissolving 20 mg of each resin foamed particle in 10 ml of chloroform.

<Measurement Method of Expansion Ratio of Biodegradable Aliphatic Polyester-Based Resin Foamed Particles and Molded Product>

A measuring cylinder charged with ethanol at 23°C was provided, and 500 or more biodegradable aliphatic polyester-based resin foamed particles (weight W (g) of the foamed particles), or the molded product of the biodegradable aliphatic polyester-based resin foamed particles cut into an appropriate size after leaving to stand under a condition of a relative humidity of 50%, at 23°C and at 1 atm for 7 days were immersed in the measuring cylinder using a wire mesh or the like. Based on the liquid level of ethanol raised by the immersion, the volume V ($cm^3$) of the foamed particles and the molded product was read. The expansion ratio of the foamed particles and the molded product was calculated by the following formula based on the weight W (g) of the foamed particles, the volume V ($cm^3$) of the foamed particles and the molded product, and the resin density $\rho$ ($g/cm^3$).

$$\texttt{Expansion ratio = V/ (W/}\rho\texttt{)}$$

<Measurement Method of Closed Cell Rate of Biodegradable Aliphatic Polyester-Based Resin Foamed Particles and Molded Product>

Multipycnometer (manufactured by Beckmann Japan Co., Ltd.) was used for the measurement according to ASTM D-2856.

<Heat Resistance of Molded Product of Biodegradable Aliphatic Polyester-Based Resin Foamed Particles>

A test piece of 100 x 100 x 30 mm was cut from the molded product of biodegradable aliphatic polyester-based resin foamed particles, and subjected to a treatment in a constant temperature and humidity chamber (60°C, relative humidity: 80%) for 24 hrs. The rate of volume change (rate of thermal expansion) was calculated based on the measurements of the length, width and thickness before and after the treatment.

<Measurement Method of Compression Strength of Molded Product of Biodegradable Aliphatic Polyester-Based Resin Foamed Particles>

A test piece of 500 x 500 x 25 mm was cut from the molded product of biodegradable aliphatic polyester-based resin foamed particles, and the compression strength (MPa) was measured using a static compression tester (model: TG-20kN, manufactured by Minebea Co., Ltd.) when pressurized until the amount of 75% compression strain is applied with respect to the molded product thickness. It should be noted that measurements of compression strength (MPa) upon application of 50% compression strain are shown for Examples and Comparative Examples.

<Dispersion State of PHBH and PLA in Resin Composition>

After the resin composition particles were stained with a $RuO_4$ stain, the section for observation was cut therefrom with a microtome (pellet TD cross section). The sample thus cut away was observed with a transmission electron microscope (manufactured by JEOL Ltd., JEM-1200EX), and the dispersion state, and the maximum diameter ($\mu$m) of the dispersed phase was measured.

Production Example 1: Production of PHBH having a 3HH proportion of 12 mol%

Composition of the seed medium was: 1 w/v% Meat-extract, 1 w/v% Bacto-Trypton, 0.2 w/v% Yeast-extract, 0.9 w/v% $Na_2PO_4 \cdot 12H_2O$, and 0.15 w/v% $KH_2PO_4$, pH 6.8.

Composition of the preculture medium was: 1.1 w/v% $Na_2PO_4 \cdot 12H_2O$, 0.19 w/v% $KH_2PO_4$ , 1.29 w/v% $(NH_4)_2SO_4$, 0.1 w/v% $MgSO_4$-$7H_2O$, 2.5 w/v% palm W olein oil, a 0.5 v/v% trace metal salt solution (a solution prepared by dissolving 1.6 w/v% $FeCl_3 \cdot 6H_2O$, 1 w/v% $CaCl_2 \cdot 2H_2O$, 0.02 w/v% $C_OCl_2 \cdot 6H_2O$, 0.016 w/v% $CuSO_4 \cdot 5H_2O$ and 0.012 w/v% $NiCl_2 \cdot 6H_2O$ in 0.1 N hydrochloric acid), and 5 x 10-6 w/v% kanamycin.

Composition of the medium for production of P(3HB-co-3HH) was: 0.385 w/v% $Na_2PO_4 \cdot 12H_2O$, 0.067 w/v% $KH_2PO_4$, 0,291 w/v% $(NH_4)_2SO_4$, 0.1 w/v% $MgSO_4 \cdot 7H_2O$, a 0.5 v/v% trace metal salt solution (a solution prepared by dissolving 1.6 w/v% $FeCl_3 \cdot 6H_2O$, 1 w/v% $CaCl_2 \cdot 2H_2O$, 0.02 w/v% $CoCl_2 \cdot 6H_2O$, 0.016 w/v% $CuSO_4 \cdot 5H_2O$ and 0.012 w/v% $NiCl_2 \cdot 6H_2O$ in 0.1 N hydrochloric acid), 0.05 w/v% BIOSPUREX 200K (deforming agent: manufactured by Cognis Japan), and 5 x 10-6 w/v% kanamycin. With respect to the carbon source, palm kernel oil olein that is a low-melting point fraction obtained by fractionating palm kernel oil was used as a single carbon source, and fed during the entire culture such that the specific substrate feeding rate became 0.08 to 0.1 (lipid (g)) x (net dry microorganism cell weight (g))-1 x (time (h))-1.

A glycerol stock (50 $\mu$l) of a PHBA-producing bacterial strain (PHB-4/pJRDdTc + 149NS171DG transformant) was inoculated in the seed medium (10 ml) and cultured for 24 hrs. The culture was inoculated in 1.8 L of the preculture medium charged in a 3-L jar fermenter (manufactured by B.E. MARUBISHI Co., Ltd., model MDL-300) at 1.0 v/v%. The operating conditions of the culture involved the culture temperature of 30°C, the stirring rate of 500 rpm, and the aeration rate of 1.8 L/min, with a pH adjusted between 6.7 and 6.8 for 28 hrs. For adjusting the pH, a 7% aqueous ammonium hydroxide solution was used.

In culturing for producing PHBH, the culture seed was inoculated in 6 L of the producing medium charged in a 10-L jar fermenter (manufactured by B.E. MARUBISHI Co., Ltd., model MDL-1000) at 5.0 v/v%. The operation conditions involved the culture temperature of 28°C, the stirring rate of 400 rpm, and the aeration rate of 3.6 L/min, with a pH adjusted between 6.7 and 6.8. For adjusting the pH, a 7% aqueous ammonium hydroxide solution was used. The culture was conducted for about 96 hrs, and after completing the culture, the microorganism cells were recovered by centrifugal separation, followed by washing with methanol, and thereafter lyophilized.

To about 1 g of the resulting dry microorganism cells was added 100 ml of chloroform, and the mixture was stirred at a room temperature over day and night, and PHBH in the microorganism cell was extracted. After the microorganism cell residues were filtrated off, the liquid was concentrated with an evaporator until the total volume became about 30 ml. Thereafter, about 90 ml of hexane was gradually added, and the mixture was left to stand for 1 hour while stirring gently. The precipitated PHBH was filtrated, and vacuum dried at 50°C for 3 hours.

The 3HH composition analysis of the resulting PHBH was carried out by gas chromatography as in the following. To about 20 mg of dry PHBH were added 2 ml of a sulfuric acid-methanol mixed liquid (15:85) and 2 ml of chloroform. The vessel was tightly sealed, and heated at 100°C for 140 min to obtain a methyl ester of PHBH decomposition product. After cooling, thereto was added 1.5 g of sodium bicarbonate in small portions to neutralize the mixture, which was left to stand until generation of a carbon dioxide gas ceases. After adding 4 ml of diisopropyl ether and mixing well, centrifugal separation was carried out. The monomer unit composition of the PHBH decomposition product in the supernatant was analyzed by capillary gas chromatography. The gas chromatograph employed was Shimadzu Corporation GC-17A, using a capillary column manufactured by GL Scienece Inc., NEUTRA BOND-1 (column length: 25 m, column internal diameter: 0.25 mm, liquid film thickness: 0.4 $\mu$m). He was used as a carrier gas, with the column inlet pressure being 100 kPa, and the sample was injected in a volume of 1 $\mu$l. With respect to the temperature conditions, the temperature was elevated from the initial temperature of 100 up to 200°C at a rate of 8°C/min, and further elevated from 200 to 290°C at a rate of 30°C/min. As a result under the aforementioned conditions, the 3HH composition of PHBH after completing the culture for 96 hrs PHBH was 12 mol% on average. In addition, the molecular weight was analyzed by the measurement of gel permeation chromatography (GPC) using a CCP&8020 system (manufactured by Tosoh Corporation) as a GPC apparatus, with a column of GPCK-805L (manufactured by Showa Denko K.K.) at a column temperature of 40°C. PHBH resin particles A and PHBH resin foamed particles B in an amount of 20 mg were dissolved in 10 ml of chloroform, and a 200 $\mu$l aliquot was injected, revealing the number average molecular weight of 240,000 and the weight average molecular weight of 520,000.

Example 1

After hand blending 75 parts by weight of PHBH (Tm: 119°C, Mw: 520,000, and specific gravity: 1.2 g/ml) having a 3HH proportion of 12 mol%, 25 parts by weight of PLA having a D-form proportion of 12 mol% (Tg: 52°C, Mw: 210,000, and specific gravity: 1.2 g/ml), and 3 parts by weight of a polyisocyanate compound (manufactured by Nippon Polyurethane Industry Co., Ltd., Millionate MR-200 (isocyanate group: 2.7 to 2.8 equivalent/ mol)), the resulting mixture was melted and kneaded in a 30 mmf biaxial extruder (manufactured by Ikegai Seisakusyo, PCM30) at a cylinder temperature of 150°C. The strand, which was extruded from a die with a small opening of 3 mmϕ attached to the extruder tip, was cut with a pelletizing machine to produce a resin composition having a particle weight of 5 mg, and a melting point of 119°C. When the dispersion state of the resin composition was observed with a transmission electron microscope, formation of a sea-island structure including a continuous phase (sea phase) of the PHBH and a dispersed phase (island phase) of the PLA was found, in which PLA was finely dispersed with a maximum diameter of 0.5 μm.

After 100 parts by weight of the resin composition was charged in a 4.5-L pressure tight vessel, 25 parts by weight of isobutane as a foaming agent, 300 parts by weight of pure water, and 2.5 parts by weight of calcium triphosphate as a dispersant were added thereto. The mixture was stirred, and after the temperature was elevated until the temperature in the vessel became 119°C (to elevate to foaming temperature), it was kept in the state of the vessel internal pressure being 2.5 MPa for 1 hour. Then, the content was released to the ambient pressure for foaming through a nozzle with a small opening provided at the lower part of the pressure tight vessel. Accordingly, biodegradable aliphatic polyester-based resin foamed particles having an expansion ratio of 20 fold and a closed cell rate of 98% were obtained.

The biodegradable aliphatic polyester-based resin foamed particles were filled in a die of 300 x 400 x 30 mm, and the water vapor of 0.10 to 0.32 MPa (gauge) was introduced into the die. Both resin foamed particles were heated to permit fusion bonding, whereby the molded product of the biodegradable aliphatic polyester-based resin foamed particles having an expansion ratio of 28 fold and a closed cell rate of 80% was obtained. The rate of thermal expansion (heat resistance) of the molded product of the biodegradable aliphatic polyester-based resin foamed particles was 0%, and the compression strength in 50% compression strain was 0.2 MPa. The results of evaluation of the molded product are shown in Table 1.

Example 2

A resin composition was obtained in a similar manner to Example 1 except that the amount of the polyisocyanate compound added was 5 parts by weight. When the dispersion state of the resin composition was observed with a transmission electron microscope, formation of a sea-island structure including a continuous phase (sea phase) of PHBH and a dispersed phase (island phase) of PLA was found, in which PLA was finely dispersed with a maximum diameter of 0.5 μm.

Water vapor heating and molding carried out after foaming the resin composition in a similar manner to Example 1 gave a molded product of biodegradable aliphatic polyester-based resin foamed particles having an expansion ratio of 23 fold and a closed cell rate of 91% was obtained. In addition, the rate of thermal expansion of the molded product of the resin foamed particles was 0%, and the compression strength in 50% compression strain was 0.23 MPa. The results of evaluation of the molded product are shown in Table 1.

Example 3

A resin composition was obtained in a similar manner to Example 1 except that 5 parts by weight of PHB was added as the crystallization nucleating agent. When the dispersion state of the resin composition was observed with a transmission electron microscope, formation of a sea-island structure including a continuous phase (sea phase) of PHBH and a dispersed phase (island phase) of PLA was found, in which PLA was finely dispersed with a maximum diameter of 0.5 μm.

Water vapor heating and molding carried out after foaming the resin composition in a similar manner to Example 1 gave a molded product of biodegradable aliphatic polyester-based resin foamed particles having an expansion ratio of 28 fold and a closed cell rate of 82% was obtained. The rate of thermal expansion of the molded product of the biodegradable aliphatic polyester-based resin foamed particles was 0%, and the compression strength in 50% compression strain was 0.2 MPa. The results of evaluation of the molded product are shown in Table 1.

Comparative Example 1

A resin composition and resin foamed particles were obtained in a similar manner to Example 1 except that PLA was not used, and the amount of PHBH added was changed from 75 parts by weight to 100 parts by weight. After the water vapor was introduced, a molded product of biodegradable aliphatic polyester-based resin foamed particles having an expansion ratio of 28 fold and a closed cell rate of 90% was obtained. In addition, the rate of thermal expansion of the molded product of the biodegradable aliphatic polyester-based resin foamed particles was 0%, and the compression strength in 50% compression strain was 0.14 MPa. The results of evaluation of the molded product are shown in Table 1.

Comparative Example 2

A resin composition was obtained in a similar manner to Example 1 except that PLA was not used, and the amount of PHBH added was changed from 75 parts by weight to 100 parts by weight, and that the temperature in the vessel was 113°C that is the foaming temperature. After the water vapor was introduced, a molded product of biodegradable aliphatic polyester-based resin foamed particles having an expansion ratio of 23 fold and a closed cell rate of 92% was obtained. In addition, the rate of thermal expansion of the molded product of the biodegradable aliphatic polyester-based resin foamed particles was 0%, and the compression strength in 50% compression strain was 0.16 MPa. The results of evaluation of the molded product are shown in Table 1.

Comparative Example 3

A resin composition was obtained in a similar manner to Example 1 except that: PHBH was not used; the amount of PLA added was changed from 25 parts by weight to 100 parts by weight; and the melting and kneading was carried out at an extruder cylinder temperature of 200°C. Next, after the resin composition was aged to permit secondary crosslinking in warm water at 42°C for 15 hrs, dehydration, drying, and impregnation of a foaming agent were carried out. For the impregnation of the foaming agent, The aged beads in an amount of 4.3 kg were charged into a 10-L rotating drum type tightly sealed vessel, respectively, and thereto were added 215 g of methanol and 1,720 g of isobutane, to allow for impregnation at 85°C for 3 hours. After air drying by ventilation at an ordinary temperature, a resin composition impregnated with the foaming agent was obtained. The resin composition was subjected to foaming in a prefoaming machine for foamed polystyrene (manufactured by Daisen Co., Ltd., DYHL-300), whereby PLA resin foamed particles having an expansion ratio of 30 fold and a closed cell rate of 98% were obtained. After the water vapor was introduced, a molded product of PLA resin foamed particles having an expansion ratio of 30 fold and a closed cell rate of 93% was obtained. In addition, the rate of thermal expansion of the molded product of the PLA resin foamed particles was 40%, and the compression strength in 50% compression strain was 0.30 MPa. The results of evaluation of the molded product are shown in Table 1.

Table 1

| | | Ex.1 | Ex.2 | Ex.3 | Compar. Ex.1 | Compar. Ex.2 | Compar. Ex.3 |
|---|---|---|---|---|---|---|---|
| PHBH | part by weight | 75 | 75 | 75 | 100 | 100 | - |
| PLA | part by weight | 25 | 25 | 25 | - | - | 100 |
| PHB | part by weight | | | 5 | | | |
| Polyisocyanate compound | part by weight | 3 | 5 | 3 | 3 | 3 | 3 |
| Cylinder temperature in extrusion | °C | 150 | 150 | 150 | 120 | 120 | 200 |
| PLA maximum diameter in resin composition | μm | 0.5 | 0.5 | 0.5 | - | - | - |
| Expansion ratio of foam molded product | fold | 28 | 23 | 28 | 28 | 23 | 30 |
| Closed cell rate in foam molded product | % | 80 | 91 | 82 | 90 | 92 | 93 |
| Compression strength of foam molded product (50% strain) | MPa | 0.2 | 0.23 | 0.2 | 0.14 | 0.16 | 0.3 |
| Heat resistance of foam molded product | % | 0 | 0 | 0 | 0 | 0 | 60 |

From Table 1, it has been revealed that the foam molded product provided using foamed particles produced by foaming a resin composition obtained by melting and kneading P3HA, a polylactic acid-based resin and an isocyanate compound is highly foamed, but has both high rigidity and heat resistance in combination.

**Claims**

1. Biodegradable aliphatic polyester resin foamed particles produced by foaming a resin composition obtained by melting and kneading a base resin constituted with a polymer (hereinafter, referred to as poly(3-hydroxyalkanoate)) having one or more recurring unit represented by the formula (1):

$$[-O-CHR-CH_2-CO-] \qquad (1)$$

(wherein, R is an alkyl group represented by $C_nH_{2+1}$; and n is an integer of 1 to 15) and a polylactic acid resin, and an isocyanate compound
wherein P3HA forms a continuous phase, and the polylactic acid resin forms a dispersed phase in the resin composition; and the maximum diameter of the dispersed phase is no greater than 5 $\mu$m and
wherein: the content of the P3HA is 70% to 80% by weight, and the content of the polylactic acid resin is 20% to 30% by weight based on the entirety of the base resin; and the content of the isocyanate compound based on 100 parts by weight of the base resin is 1.5 parts to 5.5 parts by weight.

2. The biodegradable aliphatic polyester resin foamed particles according to claim 1, wherein the P3HA is poly(3-hydroxybutyrate-co-3-hydroxyhexanoate) (hereinafter, referred to as PHBH).

3. The biodegradable aliphatic polyester resin foamed particles according to claim 2, wherein poly(3-hydroxyhexanoate) accounts for 1 mol% to 20 mol% of the composition of the copolymer component that constitutes the PHBH.

4. The biodegradable aliphatic polyester resin foamed particles according to any one of claims 1 to 3, wherein the expansion ratio of the resin foamed particles is 20 fold to 40 fold.

5. A biodegradable aliphatic polyester resin foam molded product produced by filling the biodegradable aliphatic polyester resin foamed particles according to any one of claims 1 to 4 into a die, followed by heating and molding.

6. A method for manufacturing a molded product of biodegradable aliphatic polyester resin foamed particles, the method comprising: filling the biodegradable aliphatic polyester resin foamed particles according to any one of claims 1 to 4 into a die; and then heating and molding to allow the resin foamed particles to be fused and bound with one another.

7. A resin composition for producing foamed particles obtained by melting and kneading a base resin constituted with a polymer (hereinafter, referred to as poly(3-hydroxyalkanoate)) having one or more recurring unit represented by the formula (1):

$$[-O-CHR-CH_2-CO-] \qquad (1)$$

(wherein, R is.an alkyl group represented by $C_nH_{2n+1}$; and n is an integer of 1 to 15) and a polylactic acid resin, and an isocyanate compound,
wherein P3HA forms a continuous phase, and the polylactic acid resin forms a dispersed phase in the resin composition; and the maximum diameter of the dispersed phase is no greater than 5 $\mu$m and
wherein: the content of the P3HA is 70% to 80% by weight, and the content of the polylactic acid resin is 20% to 30% by weight based on the entirety of the base resin; and the content of the isocyanate compound based on 100 parts by weight of the base resin is 1.5 parts to 5.5 parts by weight.

8. The resin composition for producing foamed particles according to claim 7, wherein the P3HA is poly(3-hydroxybutyrate-co-3-hydroxyhexanoate) (hereinafter, referred to as PHBH).

9. The resin composition for producing foamed particles according to claim 8, wherein poly(3-hydroxyhexanoate) accounts for 1 mol% to 20 mol% of the composition of the copolymer component that constitutes the PHBH.

**Patentansprüche**

1. Geschäumte Teilchen aus biologisch abbaubarem aliphatischem Polyesterharz, hergestellt durch Schäumen einer Harzzusammensetzung, erhalten durch Schmelzen und Kneten eines Grundharzes, gebildet mit einem Polymer (nachstehend als Poly(3-hydroxyalkanoat) bezeichnet), mit einer oder mehreren wiederkehrenden Einheiten, dargestellt durch die Formel (1):

$$[-O-CHR-CH_2-CO-] \qquad (1)$$

(wobei R eine Alkylgruppe ist, dargestellt durch $C_nH_{2n+1}$; und n eine ganze Zahl von 1 bis 15 ist) und einem Polymilchsäureharz und einer Isocyanatverbindung,
wobei P3HA eine kontinuierliche Phase bildet und das Polymilchsäureharz eine dispergierte Phase in der Harzzusammensetzung bildet; und der maximale Durchmesser der dispergierten Phase nicht größer als 5 $\mu$m ist und wobei: der Gehalt von P3HA 70 bis 80 Gewichts-% beträgt und der Gehalt des Polymilchsäureharzes 20 bis 30 Gewichts-%, bezogen auf die Gesamtheit des Grundharzes, beträgt; und der Gehalt der Isocyanatverbindung, bezogen auf 100 Gewichtsteile des Grundharzes, 1,5 bis 5,5 Gewichtsteile beträgt.

2. Die geschäumten Teilchen aus biologisch abbaubarem aliphatischem Polyesterharz gemäß Anspruch 1, wobei das P3HA Poly(3-hydroxybutyrat-co-3-hydroxyhexanoat) ist (nachstehend als PHBH bezeichnet).

3. Die geschäumten Teilchen aus biologisch abbaubarem aliphatischem Polyesterharz gemäß Anspruch 2, wobei Poly(3-hydroxyhexanoat) 1 Mol-% bis 20 Mol-% von der Zusammensetzung der Copolymerkomponente, die das PHBH bildet, beträgt.

4. Die geschäumten Teilchen aus biologisch abbaubarem aliphatischem Polyesterharz gemäß einem der Ansprüche 1 bis 3, wobei das Expansionsverhältnis der geschäumten Harzteilchen das 20-fache bis 40-fache beträgt.

5. Ein geformtes Produkt aus geschäumtem biologisch abbaubarem aliphatischem Polyesterharz, hergestellt durch Füllen der geschäumten Teilchen aus biologisch abbaubarem aliphatischem Polyesterharz gemäß einem der Ansprüche 1 bis 4 in ein Formwerkzeug, gefolgt von Erwärmen und Formen.

6. Ein Verfahren zur Herstellung eines geformten Produkts aus geschäumten Teilchen aus biologisch abbaubarem aliphatischem Polyesterharz, wobei das Verfahren umfasst: Füllen der geschäumten Teilchen aus biologisch abbaubarem aliphatischem Polyesterharz gemäß einem der Ansprüche 1 bis 4 in ein Formwerkzeug; und anschließend Erwärmen und Formen, um ein Verschmelzen der geschäumten Harzteilchen und ein Binden aneinander zu ermöglichen.

7. Eine Harzzusammensetzung zur Herstellung von geschäumten Teilchen, erhalten durch Schmelzen und Kneten eines Grundharzes, gebildet mit einem Polymer (nachstehend als Poly(3-hydroxyalkanoat) bezeichnet), mit einer oder mehreren wiederkehrenden Einheiten, dargestellt durch die Formel (1):

$$[-O-CHR-CH_2-CO-] \qquad (1)$$

(wobei R eine Alkylgruppe ist, dargestellt durch $C_nH_{2n+1}$; und n eine ganze Zahl von 1 bis 15 ist) und einem Polymilchsäureharz und einer Isocyanatverbindung,
wobei P3HA eine kontinuierliche Phase bildet und das Polymilchsäureharz eine dispergierte Phase in der Harzzusammensetzung bildet; und der maximale Durchmesser der dispergierten Phase nicht größer als 5 $\mu$m ist und wobei: der Gehalt des P3HA 70 bis 80 Gewichts-% beträgt und der Gehalt des Polymilchsäureharzes 20 bis 30 Gewichts-%, bezogen auf die Gesamtheit des Grundharzes, beträgt;
und der Gehalt der Isocyanatverbindung, bezogen auf 100 Gewichtsteile des Grundharzes, 1,5 bis 5,5 Gewichtsteile beträgt.

8. Die Harzzusammensetzung zur Herstellung von geschäumten Teilchen gemäß Anspruch 7, wobei das P3HA Poly(3-hydroxybutyrat-co-3-hydroxyhexanoat) (nachstehend als PHBH bezeichnet) ist.

9. Die Harzzusammensetzung zur Herstellung von geschäumten Teilchen gemäß Anspruch 8, wobei Poly(3-hydroxyhexanoat) 1 Mol-% bis 20 Mol-% der Zusammensetzung der Copolymerkomponente, die das PHBH bildet, beträgt.

**Revendications**

1. Particules expansées de résine de polyester aliphatique biodégradable, produites en faisant mousser une composition de résine obtenue par fusion et pétrissage d'une résine de base constituée avec un polymère (dénommé ci-après poly-(3-hydroxyalcanoate)) ayant un ou plusieurs motifs récurrents représentés par la formule (1) :

$$[-O-CHR-CH_2-CO-] \qquad (1)$$

(dans laquelle R est un groupe alkyle représenté par $C_nH_{2n+1}$ ; et n est un entier de 1 à 15) et une résine d'acide polylactique, et un composé isocyanate,
dans lesquelles le P3HA forme une phase continue et la résine d'acide polylactique forme une phase dispersée dans la composition de résine ; et le diamètre maximal de la phase dispersée n'est pas supérieur à 5 $\mu$m, et
dans lesquelles la teneur en P3HA est de 70 % à 80 % en poids, et la teneur en résine d'acide polylactique est de 20 % à 30 % en poids sur la base de la totalité de la résine de base ; et la teneur en composé isocyanate sur la base de 100 parties en poids de la résine de base est de 1,5 parties à 5,5 parties en poids.

2. Particules expansées de résine de polyester aliphatique biodégradable selon la revendication 1, dans lesquelles le P3HA est le poly-(3-hydroxybutyrate-co-3-hydroxyhexanoate) (dénommé ci-après le PHBH).

3. Particules expansées de résine de polyester aliphatique biodégradable selon la revendication 2, dans lesquelles le poly-(3-hydroxyhexanoate) constitue 1 % en moles à 20 % en moles de la composition du composant de copolymère qui constitue le PHBH.

4. Particules expansées de résine de polyester aliphatique biodégradable selon l'une quelconque des revendications 1 à 3, dans lesquelles le rapport d'expansion des particules expansées de résine est de 20 fois à 40 fois.

5. Produit moulé de mousse de résine de polyester aliphatique biodégradable fabriqué par le remplissage des particules expansées de résine de polyester aliphatique biodégradable selon l'une quelconque des revendications 1 à 4 dans un moule, suivi par le chauffage et le moulage.

6. Méthode de fabrication d'un produit moulé de particules expansées de résine de polyester aliphatique biodégradable, la méthode comprenant : le remplissage des particules expansées de résine de polyester aliphatique biodégradable selon l'une quelconque des revendications 1 à 4 dans un moule, et puis le chauffage et le moulage pour permettre aux particules expansées de résine d'être fondues et liées les unes aux autres.

7. Composition de résine pour la production de particules expansées, obtenue par fusion et pétrissage d'une résine de base constituée avec un polymère (dénommé ci-après poly-(3-hydroxyalcanoate)) ayant un ou plusieurs motifs récurrents représentés par la formule (1) :

$$[-O-CHR-CH_2-CO-] \qquad (1)$$

(dans laquelle R est un groupe alkyle représenté par $C_nH_{2+1}$ ; et n est un entier de 1 à 15) et une résine d'acide polylactique, et un composé isocyanate,
dans lesquelles le P3HA forme une phase continue et la résine d'acide polylactique forme une phase dispersée dans la composition de résine ; et le diamètre maximal de la phase dispersée n'est pas supérieur à 5 $\mu$m, et
dans lesquelles la teneur en P3HA est de 70 % à 80 % en poids, et la teneur en résine d'acide polylactique est de 20 % à 30 % en poids sur la base de la totalité de la résine de base ; et la teneur en composé isocyanate sur la base de 100 parties en poids de la résine de base est de 1,5 parties à 5,5 parties en poids.

8. Composition de résine pour la production de particules expansées selon la revendication 7, dans laquelle le P3HA est le poly-(3-hydroxybutyrate-co-3-hydroxyhexanoate) (dénommé ci-après le PHBH).

9. Composition de résine pour la production de particules expansées selon la revendication 8, dans laquelle le poly-(3-hydroxyhexanoate) constitue 1 % en moles à 20 % en moles de la composition du composant de copolymère qui constitue le PHBH.

**EP 2 168 993 B1**

**Patent documents cited in the description**

- JP 2006022242 A
- JP 2003301068 A
- JP HEI5170966 A
- JP 2001026658 A